# EUROPÄISCHE PATENTANMELDUNG

(11) **EP 3 037 291 A1**
(43) Veröffentlichungstag der Anmeldung: **29.06.2016**
(21) Anmeldenummer: 15195807.1
(22) Anmeldetag: 23.11.2015
(51) Int. Cl.: B60J 10/00

(54) **ABDICHTUNGSANORDNUNG FÜR EINE FAHRZEUGSCHEIBE**

(30) Priorität: 22.12.2014 DE 202014106204 U
(71) Anmelder: REHAU AG + Co, 95111 Rehau (DE)
(72) Erfinder: Chlebecek, Wolfgang, 95111 Rehau (DE); Frank, Michael, 95145 Oberkotzau (DE); Schildbach, Peter, 95126 Schwarzenbach an der Saale (DE)

(57) **Zusammenfassung**

Die vorliegende Erfindung betrifft eine Abdichtungsanordnung für eine Fahrzeugscheibe (10), insbesondere für eine Windschutzscheibe, umfassend eine Halteschiene (20) mit einem Rastkanal (27), der durch eine Zentrier- und Führungsschiene (41) und einen Federschenkel (25) gebildet ist, wobei die Halteschiene (20) an einer Fahrzeugscheibe (10) mittels eines Befestigungsabschnittes (30) befestigbar ist, und mit einem Anbauteil (14) mit einem Führungskanal (40), der durch einen Rasthaken (16) und einen Positionierungsanschlag (42) definiert ist, wobei im Führungskanal (40) die Führungsschiene (41) angeordnet ist und wobei im Rastkanal (27) die Rastschiene (16) eingerastet ist, wobei die Zentrier- und Führungsschiene (41) zwischen dem Federschenkel (25) und dem Befestigungsabschnitt (30) angeordnet und nur mit dem Befestigungsabschnitt (30) verbunden ist, und der Federschenkel (25) über einen unterhalb der Zentrier- und Führungsschiene (41) angeordneten Verbindungsabschnitt (50) nur mit dem Befestigungsabschnitt (30) verbunden ist, wobei der Verbindungsabschnitt (50) und die Zentrier- und Führungsschiene (41) so ausgestaltet sind, dass bei der Verbindung von Halteschiene (20) und Anbauteil (14) der Verbindungsabschnitt (50) aufgrund der auf den Federschenkel (25) einwirkenden Montagekraft den Verbindungsabschnitt (50) von der Zentrier- und Führungsschiene (41) entfernt, und bei der Demontage von Halteschiene (20) und Anbauteil (14) der Verbindungsabschnitt (50) an der Zentrier- und Führungsschiene (41) anliegt.

## Beschreibung

Die vorliegende Erfindung betrifft eine Abdichtungsanordnung für eine Fahrzeugscheibe, insbesondere für eine Windschutzscheibe, umfassend eine Halteschiene mit einem Rastkanal, der durch eine Zentrier- und Führungsschiene und einen Federschenkel gebildet ist wobei die Halteschiene an einer Fahrzeugscheibe mittels eines Befestigungsabschnittes befestigbar ist, und mit einem Anbauteil mit einem Führungskanal, der durch einen Rasthaken und einen Positionierungsanschlag definiert ist, wobei im Führungskanal die Führungsschiene angeordnet ist und wobei im Rastkanal die Rastschiene eingerastet ist.

Eine gattungsgemäße Abdichtungsanordnung ist in der WO 2013/120671 A1 offenbart. Nachteilig an einer Abdichtungsanordnung des Standes der Technik ist, dass starke Variation der Montage- und Demontagekräfte nicht möglich ist.

Vor diesem Hintergrund liegt der Erfindung die Aufgabe zugrunde, eine Abdichtungsanordnung mit den eingangs beschriebenen Merkmalen anzugeben, die eine leichte Montierbarkeit eines Anbauteils bei gleichzeitig hoher Haltekraft des Anbauteils ermöglicht.

Erfindungsgemäß wird diese Aufgabe durch eine Abdichtungsanordnung mit den eingangs beschriebenen Merkmalen gelöst ist, wobei die Zentrier- und Führungsschiene zwischen dem Federschenkel und dem Befestigungsabschnitt angeordnet und nur mit dem Befestigungsabschnitt verbunden ist, und der Federschenkel über einen unterhalb der Zentrier- und Führungsschiene angeordneten Verbindungsabschnitt nur mit dem Befestigungsabschnitt verbunden ist, wobei der Verbindungsabschnitt und die Zentrier- und Führungsschiene so ausgestaltet sind, dass bei der Verbindung von Halteschiene und Anbauteil der Verbindungsabschnitt aufgrund der auf den Federschenkel einwirkenden Montagekraft den Verbindungsabschnitt von der Zentrier- und Führungsschiene entfernt, und bei der Demontage von Halteschiene und Anbauteil der Verbindungsabschnitt an der Zentrier- und Führungsschiene anliegt. Bei der Montage des Anbauteils erfolgt so eine Vergrößerung des Abstandes zwischen dem Verbindungsabschnitt und der Zentrier- und Führungsschiene, während bei einer Demontage des Anbauteils der Verbindungsabschnitt an der Zentrier- und Führungsschiene anliegt. Der Federschenkel überträgt hierbei die Montagekräfte auf den Verbindungsabschnitt. Der Verbindungsabschnitt wirkt als Hebelarm und die Montagekräfte werden reduziert. Vorteilhafterweise kann über die Länge des Verbindungsabschnittes die Montagekraft in einem weiten Bereich konstruktiv eingestellt werden. Im Gegensatz dazu vergrößert sich bei der Demontage des Anbauteils die Demontagekraft, da der Hebelarm verkürzt wird wenn der Verbindungsabschnitt an der Zentrier- und Führungsschiene anliegt.

Bevorzugt ist die Halteschiene als eine Kunststoff-Profilleiste ausgebildet. Eine derartige Kunststoff-Profilleiste lässt sich insbesondere im Kunststoff-Extrusionsverfahren bzw. Mehrkomponenten-Kunststoff-Extrusionsverfahren herstellen. Der Kunststoff der Kunststoff-Profilleiste kann Polysulfon (PSU), Poly(ethersulfone) (PES), Polyetherimide (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Polyvinylchlorid (PVC), Polyethylen (PE), Polypropylen (PP), Acrylnitril-Butadien-Styrol (ABS) oder Mischungen der vorgenannten Materialien umfassen.

Die Halteschiene kann mindestens eine Verstärkungs-Einlage enthalten. Die Verstärkungs-Einlage kann sich bis in den Bereich der Zentrier- und Führungsschiene erstrecken und/oder die Verstärkungs-Einlage kann die Zentrier- und Führungsschiene bilden. Insbesondere wenn die Verstärkungs-Einlage die Zentrier- und Führungsschiene bildet, kann die Halteschiene kompakter und kostengünstiger hergestellt werden.

Die Verstärkungs-Einlage kann sich bis in den Bereich des Federschenkels erstrecken und/oder die Verstärkungs-Einlage kann den Federschenkel bilden.

Die Verstärkungs-Einlage kann aus einem metallischen Werkstoff, insbesondere aus Aluminium oder einer Aluminiumlegierung oder aus Stahl oder einer Stahllegierung sein.

Die Verstärkung-Einlage kann eine Dicke im Bereich von 0,05 bis 0,4 Millimeter, vorzugsweise im Bereich von 0,1 bis 0,3 Millimeter aufweisen.

Der Endabschnitt des Federschenkels kann eine in Richtung des Rastkanals weisende Ausformung aufweisen, die mit dem Rasthaken zusammenwirkt.

Bei dem Anbauteil handelt es sich bevorzugt um eine Wasserkastenabdeckung.

Teil der Erfindung ist ferner eine Fahrzeugscheibe mit einer an der Fahrzeugscheibe befestigten, vorstehend beschriebenen Abdichtungsanordnung, sowie ein Kraftfahrzeug mit einer Fahrzeugscheibe.

Die Erfindung wird anhand der nachfolgenden lediglich Ausführungsbeispiele darstellender Figuren näher erläutert. Gleiche oder funktionsgleiche Elemente sind mit den gleichen Bezugszeichen versehen. Es zeigen:
- Fig. 1: eine Querschnittsdarstellung einer Abdichtungsanordnung für eine Fahrzeugscheibe;
- Fig. 2: eine Querschnittsdarstellung einer weiteren Abdichtungsanordnung für eine Fahrzeugscheibe.

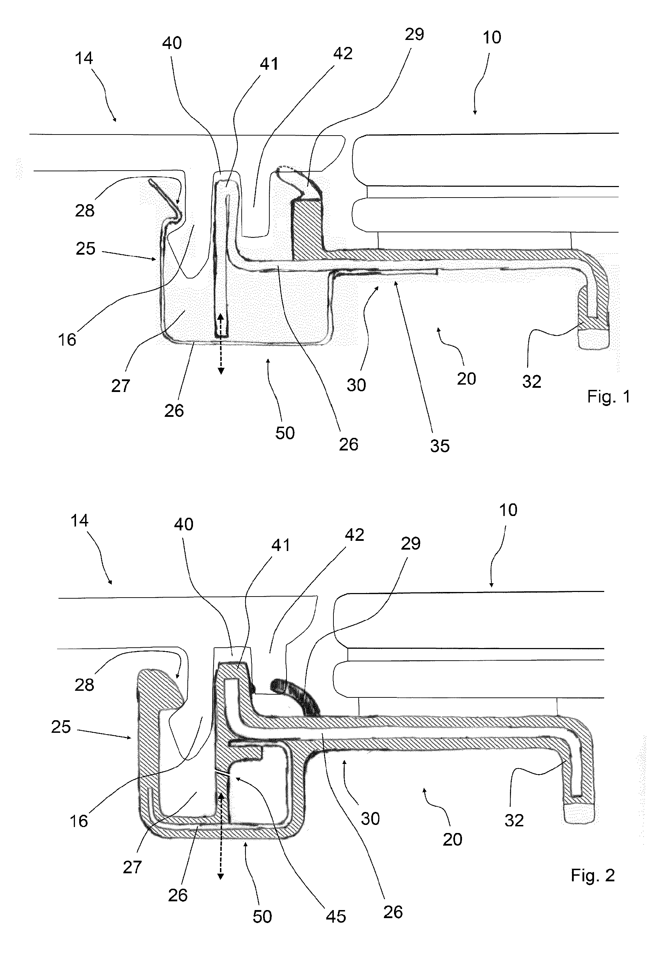

Die Fig. 1 zeigt eine Querschnittsdarstellung einer Abdichtungsanordnung für eine Fahrzeugscheibe 10, insbesondere für eine Windschutzscheibe, umfassend eine Halteschiene 20 mit einem Rastkanal 27, der durch eine Zentrier- und Führungsschiene 41 und einen Federschenkel 25 gebildet ist. Die Halteschiene 20 ist an einer Fahrzeugscheibe 10 mittels eines Befestigungsabschnittes 30 befestigbar ist. Die Abdichtungsanordnung umfasst ferner ein Anbauteil 14 mit einem Führungskanal 40, der durch einen Rasthaken 16 und einen Positionierungsanschlag 42 definiert ist, wobei im Führungskanal 40 die Führungsschiene 41 angeordnet ist und wobei im Rastkanal 27 die Rastschiene 16 eingerastet ist. Die Zentrier- und Führungsschiene 41 ist zwischen dem Federschenkel 25 und dem Befestigungsabschnitt 30 angeordnet und nur mit dem Befestigungsabschnitt 30 verbunden. Der Federschenkel 25 ist über einen unterhalb der Zentrier- und Führungsschiene 41 angeordneten Verbindungsabschnitt 50 nur mit dem Befestigungsabschnitt 30 verbunden. Hierbei sind der Verbindungsabschnitt 50 und die Zentrier- und Führungsschiene 41 so ausgestaltet, dass bei der Verbindung von Halteschiene 20 und Anbauteil 14 der Verbindungsabschnitt 50 aufgrund der auf den Federschenkel 25 einwirkenden Montagekraft den Verbindungsabschnitt 50 von der Zentrier- und Führungsschiene 41 entfernt, und bei der Demontage von Halteschiene 20 und Anbauteil 14 der Verbindungsabschnitt 50 an der Zentrier- und Führungsschiene 41 anliegt (angedeutet durch schraffierten Doppelpfeil). Die Halteschiene 20 enthält mindestens eine Verstärkungs-Einlage 26. Die Verstärkungs-Einlage 26 erstreckt sich bis in den Bereich der Zentrier- und Führungsschiene 41 und die Verstärkungs-Einlage 26 bildet die Zentrier- und Führungsschiene 41. Die Verstärkungs-Einlage 26 erstreckt sich bis in den Bereich des Federschenkels 25 und die Verstärkungs-Einlage 26 bildet den Federschenkel 25. Die Verstärkungs-Einlage 26 besteht aus einem metallischen Werkstoff, insbesondere aus Aluminium oder einer Aluminiumlegierung oder aus Stahl oder einer Stahllegierung. Die Verstärkung-Einlage 26 weist eine Dicke im Bereich 0,05 bis 0,4 Millimeter, vorzugsweise im Bereich von 0,1 bis 0,3 Millimeter auf. Der Endabschnitt des Federschenkels 25 weist eine in Richtung des Rastkanals 27 weisende Ausformung 28 auf, die mit dem Rasthaken 16 zusammenwirkt. Zwischen dem Befestigungsabschnitt 30 und der Unterseite des Anbauteils 14 ist eine Dichtlippe 29 angeordnet. Das Anbauteil 14 ist eine Wasserkastenabdeckung. Die Halteschiene 20 ist als eine Kunststoff-Profilleiste ausgebildet. Eine derartige Kunststoff-Profilleiste lässt sich insbesondere im Kunststoff-Extrusionsverfahren bzw. Mehrkomponenten-Kunststoff-Extrusionsverfahren herstellen. Der Kunststoff der Kunststoff-Profilleiste kann Polysulfon (PSU), Poly(ethersulfone) (PES), Polyetherimide (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Polyvinylchlorid (PVC), Polyethylen (PE), Polypropylen (PP), Acrylnitril-Butadien-Styrol (ABS) oder Mischungen der vorgenannten Materialien umfassen.

Die Fig. 2 zeigt eine Querschnittsdarstellung einer weiteren Abdichtungsanordnung für eine Fahrzeugscheibe 10, insbesondere für eine Windschutzscheibe, umfassend eine Halteschiene 20 mit einem Rastkanal 27, der durch eine Zentrier- und Führungsschiene 41 und einen Federschenkel 25 gebildet ist. Die Halteschiene 20 ist an einer Fahrzeugscheibe 10 mittels eines Befestigungsabschnittes 30 befestigbar ist. Die Abdichtungsanordnung umfasst ferner ein Anbauteil 14 mit einem Führungskanal 40, der durch einen Rasthaken 16 und einen Positionierungsanschlag 42 definiert ist, wobei im Führungskanal 40 die Führungsschiene 41 angeordnet ist und wobei im Rastkanal 27 die Rastschiene 16 eingerastet ist. Die Zentrier- und Führungsschiene 41 ist zwischen dem Federschenkel 25 und dem Befestigungsabschnitt 30 angeordnet und nur mit dem Befestigungsabschnitt 30 verbunden. Der Federschenkel 25 ist über einen unterhalb der Zentrier- und Führungsschiene 41 angeordneten Verbindungsabschnitt 50 nur mit dem Befestigungsabschnitt 30 verbunden. Hierbei sind der Verbindungsabschnitt 50 und die Zentrier- und Führungsschiene 41 so ausgestaltet, dass bei der Verbindung von Halteschiene 20 und Anbauteil 14 der Verbindungsabschnitt 50 aufgrund der auf den Federschenkel 25 einwirkenden Montagekraft den Verbindungsabschnitt 50 von der Zentrier- und Führungsschiene 41 entfernt, und bei der Demontage von Halteschiene 20 und Anbauteil 14 der Verbindungsabschnitt 50 an der Zentrier- und Führungsschiene 41 anliegt (angedeutet durch schraffierten Doppelpfeil). Die Halteschiene 20 enthält mindestens eine Verstärkungs-Einlage 26. Die Verstärkungs-Einlage 26 erstreckt sich bis in den Bereich der Zentrier- und Führungsschiene 41. Die Verstärkungs-Einlage 26 erstreckt sich bis in den Bereich des Federschenkels 25. Zwischen der Zentrier- und Führungsschiene 41 und dem Verbindungsabschnitt 50 ist eine Materialtrennung 45 vorgesehen. Die Verstärkungs-Einlage 26 besteht aus einem metallischen Werkstoff, insbesondere aus Aluminium oder einer Aluminiumlegierung oder aus Stahl oder einer Stahllegierung. Die Verstärkung-Einlage 26 weist eine Dicke im Bereich 0,05 bis 0,4 Millimeter, vorzugsweise im Bereich von 0,1 bis 0,3 Millimeter auf. Der Endabschnitt des Federschenkels 25 weist eine in Richtung des Rastkanals 27 weisende Ausformung 28 auf, die mit dem Rasthaken 16 zusammenwirkt. Zwischen dem Befestigungsabschnitt 30 und der Unterseite des Anbauteils 14 ist eine Dichtlippe 29 angeordnet. Das Anbauteil 14 ist eine Wasserkastenabdeckung. Die Halteschiene 20 ist als eine Kunststoff-Profilleiste ausgebildet. Eine derartige Kunststoff-Profilleiste lässt sich insbesondere im Kunststoff-Extrusionsverfahren bzw. Mehrkomponenten-Kunststoff-Extrusionsverfahren herstellen. Der Kunststoff der Kunststoff-Profilleiste kann Polysulfon (PSU), Poly(ethersulfone) (PES), Polyetherimide (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Polyvinylchlorid (PVC), Polyethylen (PE), Polypropylen (PP), Acrylnitril-Butadien-Styrol (ABS) oder Mischungen der vorgenannten Materialien umfassen.

## Patentansprüche

1. Abdichtungsanordnung für eine Fahrzeugscheibe (10), insbesondere für eine Windschutzscheibe, umfassend:
- eine Halteschiene (20) mit einem Rastkanal (27), der durch eine Zentrier- und Führungsschiene (41) und einen Federschenkel (25) gebildet ist, wobei die Halteschiene (20) an einer Fahrzeugscheibe (10) mittels eines Befestigungsabschnittes (30) befestigbar ist, und
- einem Anbauteil (14) mit einem Führungskanal (40), der durch einen Rasthaken (16) und einen Positionierungsanschlag (42) definiert ist, wobei im Führungskanal (40) die Führungsschiene (41) angeordnet ist und wobei im Rastkanal (27) die Rastschiene (16) eingerastet ist,
**dadurch gekennzeichnet, dass**
die Zentrier- und Führungsschiene (41) zwischen dem Federschenkel (25) und dem Befestigungsabschnitt (30) angeordnet und nur mit dem Befestigungsabschnitt (30) verbunden ist,
und der Federschenkel (25) über einen unterhalb der Zentrier- und Führungsschiene (41) angeordneten Verbindungsabschnitt (50) nur mit dem Befestigungsabschnitt (30) verbunden ist,
wobei der Verbindungsabschnitt (50) und die Zentrier- und Führungsschiene (41) so ausgestaltet sind, dass bei der Verbindung von Halteschiene (20) und Anbauteil (14) der Verbindungsabschnitt (50) aufgrund der auf den Federschenkel (25) einwirkenden Montagekraft den Verbindungsabschnitt (50) von der Zentrier- und Führungsschiene (41) entfernt, und bei der Demontage von Halteschiene (20) und Anbauteil (14) der Verbindungsabschnitt (50) an der Zentrier- und Führungsschiene (41) anliegt.

2. Abdichtungsanordnung nach Anspruch 1, **dadurch gekennzeichnet, dass** die Halteschiene (20) mindestens eine Verstärkungs-Einlage (26) enthält.

3. Abdichtungsanordnung nach Anspruch 2, **dadurch gekennzeichnet, dass** sich die Verstärkungs-Einlage (26) bis in den Bereich der Zentrier- und Führungsschiene (41) erstreckt und/oder die Verstärkungs-Einlage (26) die Zentrier- und Führungsschiene (41) bildet.

4. Abdichtungsanordnung nach Anspruch 2 oder 3, **dadurch gekennzeichnet, dass** sich die Verstärkungs-Einlage (26) bis in den Bereich des Federschenkels (25) erstreckt und/oder die Verstärkungs-Einlage (26) den Federschenkel (25) bildet.

5. Abdichtungsanordnung nach einem der Ansprüche 2 bis 4, **dadurch gekennzeichnet, dass** die Verstärkungs-Einlage (26) aus einem metallischen Werkstoff, insbesondere aus Aluminium oder einer Aluminiumlegierung oder aus Stahl oder einer Stahllegierung ist.

6. Abdichtungsanordnung nach einem der Ansprüche 2 bis 5, **dadurch gekennzeichnet**, die Verstärkung-Einlage (26) eine Dicke im Bereich von 0,05 bis 0,4 Millimeter, vorzugsweise im Bereich von 0,1 bis 0,3 Millimeter aufweist.

7. Abdichtungsanordnung nach einem der vorstehenden Ansprüche, **dadurch gekennzeichnet, dass** der Endabschnitt des Federschenkels (25) eine in Richtung des Rastkanals (27) weisende Ausformung (28) aufweist, die mit dem Rasthaken (16) zusammenwirkt.

8. Abdichtungsanordnung nach einem der vorstehenden Ansprüche, **dadurch gekennzeichnet, dass** das Anbauteil (14) eine Wasserkastenabdeckung ist.

9. Fahrzeugscheibe (10) mit einer an der Fahrzeugscheibe (10) befestigten Abdichtungsanordnung nach einem der vorstehenden Ansprüche.

10. Kraftfahrzeug mit einer Fahrzeugscheibe nach Anspruch 9.
